# EUROPEAN PATENT SPECIFICATION

(11) **EP 2 931 468 B1**
(45) Date of publication and mention of the grant of the patent: **13.05.2020**
(21) Application number: 13824022.1
(22) Date of filing: 10.12.2013
(51) Int. Cl.: B23K 26/14, B23K 26/08, B23K 26/10, B23K 26/60

(54) **AUTOMATED APPARATUS OF LASER BEAM WELDING**
AUTOMATISIERTE VORRICHTUNG ZUM LASERSTRAHLSCHWEISSEN
APPAREIL AUTOMATISÉ DE SOUDAGE PAR FAISCEAU LASER

(30) Priority: 10.12.2012 IT SA20120016
(43) Date of publication of application: 21.10.2015
(73) Proprietor: Universita' Degli Studi di Salerno, 84084 Fisciano (SA) (IT)
(72) Inventor: ALFIERI, Vittorio, I-84084 Fisciano (SA) (IT); CAIAZZO, Fabrizia, I-84084 Fisciano (SA) (IT); CARDAPROPOLI, Francesco, I-84084 Fisciano (SA) (IT); CORRADO, Gaetano, I-84084 Fisciano (SA) (IT); SERGI, Vincenzo, I-84084 Fisciano (SA) (IT)
(74) Representative: Scilletta, Andrea
(86) International application number: PCT/IB2013/060769
(87) International publication number: WO 2014/091400

(56) References cited:
- EP-A1- 1 016 491
- EP-A2- 1 016 492
- WO-A1-2009/068843
- WO-A1-2012/104532
- JP-A- H08 238 587
- US-A- 3 875 364
- US-A- 4 599 505
- US-A- 5 393 948

## Description

The present invention concerns an automated apparatus of laser beam welding that allows in a controlled, versatile, efficient, reliable, simple, and inexpensive to make laser beam welding protecting the weld pool, and consequently the weld joint, from non-controlled oxidation and nitridation.

Automated apparatuses of laser beam welding are presently widely used in several industrial applications wherein it is necessary to weld two or more metal pieces, such as for instance in the manufacture of vehicles, ships and aircrafts and in the manufacture of electronic devices and other products of mass consumption.

An automated apparatus of laser beam welding uses a laser source emitting a laser beam, exiting from a laser head, that concentrates energy on a limited area of junction, thus generating welding with deeper and narrower seams with respect to those obtained with other welding processes, such as for instance arc welding, further allowing the execution of complex welding operations thanks to the control of a processing and control unit. A process of laser beam welding may employ filler material, that is added to the two or more pieces to weld, or not. Both the laser source and the possible filler material are moved in a mechanical manner under the control of the processing and control unit of the automated apparatus; the movement speed of the laser head, correlated to the welding speed, depends on the size and material of the pieces to weld, and it is frequently of the order of 1 m/min, although it is possible to reach even higher values. The welding process does not require vacuum conditions, whereby it usually occurs in free air.

Laser beam welding of metal alloys highly reactive to the atmospheric agents (such as oxygen and nitrogen) imposes the need of protecting the welding zone by means of a cover. By way of example, and not by way of limitation, such highly reactive alloys comprise alloys of titanium, zirconium, niobium. This entails that welding must remain in an inert environment for avoid the reactive processes of oxidation or nitridation.

In the prior art some solutions to this problem have been developed.

A first solution is disclosed in the patent documents JP 58011823 A and US 5302801 A, wherein a laser apparatus is provided with a protective cover tending to seal the welding zone and within which inert gas is delivered. However, such apparatus is not very versatile, because the protective cover that is used limits the complexity of the welding operations that can be made, and furthermore protection from oxidation and nitridation is not efficient, due to the movement relative to the laser source and to the protective cover with respect to the joint under welding.

Another solution is disclosed in the patent documents JP 2025271 A, JP 10328876 A and US 6111214 A, wherein a laser apparatus is provided with one or more nozzles which emit a jet of inert gas on the joint under welding (i.e. on the portion of the pieces under welding that is hit by the laser beam). In particular, the direction of the jet emitted by the nozzles form an angle with the direction of emission of the laser beam that generally ranges between 35° and 90°, although the prevailing teaching is that this angle is equal or close to 90°. However, such apparatus is not much efficient on protecting the welding that is made from oxidation and nitridation, since the jet of inert gas does not properly cover the welding zone.

A further solution is disclosed in the patent document KR 20040043451 A, wherein the welding process is modified by depositing on the pieces to weld a layer of protective material having a good transmittance of the welding laser beam at the wavelength of the laser source used by the automated apparatus. However, such welding process is extremely complex, longer and consequently more expensive, rendering the related apparatus not much versatile.

Documents EP 1016492 A2 and EP 1016491 A1 disclose methods and apparatus for machining a workpiece through laser welding with the supply of a process gas and an inert gas for shielding the surface of the workpiece from the surrounding atmosphere. In particular, document EP 1016492 A2 discloses an automated apparatus of laser beam welding according to the preamble of claims 1 and 2.

It is an object of this invention, therefore, to allow, in a controlled, versatile, efficient, reliable, simple, and inexpensive way, to make laser beam welding protecting the weld pool, and consequently the weld joint and the seam that is creates on the latter, from oxidation and nitridation.

In order to solve this object, the present invention provides an automated apparatus of laser beam welding according to claims 1 and 2.

It is specific subject-matter of the present invention an automated apparatus of laser beam welding comprising a laser head configured to emit a laser beam, the laser head being configured to be moved by a processing and control unit so as to translate over a supporting base, having a upper surface, whereby, when the laser head emits the laser beam, the laser head translates in a welding advance direction, the automated apparatus being characterised in that it further comprises a protection shoe, having a perforated lower plate, that is coupled to the laser head through mechanical coupling means so that, when the laser head emits the laser beam translating along the welding advance direction, the shoe follows the laser head along the welding advance direction, the shoe being provided with an inner cavity accessible from outside through at least one aperture configured to introduce inert gas and closed at the bottom by the perforated lower plate, the inner cavity housing an inner diffusion assembly, whereby when inert gas is introduced in the inner cavity it spreads under at least one portion of the lower plate.

According to another aspect of the invention, said inner diffusion assembly may comprise flakes of steel wool placed so as to fill the whole inner cavity and having a density ranging from 150 kg/m³ to 310 kg/m³, preferably ranging from 180 kg/m³ to 280 kg/m³, more preferably ranging from 200 kg/m³ to 260 kg/m³, still more preferably ranging from 220 kg/m³ to 240 kg/m³, even more preferably equal to 230 kg/m³.

According to a further aspect of the invention, the perforated lower plate may be provided with a plurality of holes each having a diameter ranging from 0,2 mm to 1 mm, preferably ranging from 0,3 mm to 0,8 mm, more preferably ranging from 0,4 mm to 0,6 mm, still more preferably equal to 0,5 mm.

According to an additional aspect of the invention, said mechanical coupling means may comprise moving means configured to be controlled by said processing and control unit and to give to the shoe from one to six degrees of freedom with respect to the laser head.

According to an even further aspect of the invention, said moving means may be configured to translate the shoe according to two opposite directions along a straight line parallel to the longitudinal axis of the laser head and to rotate the shoe in two opposite directions around an axis parallel to the upper surface of the supporting base and orthogonal to the welding advance direction, whereby the shoe has two degrees of freedom with respect to the laser head.

According to another aspect of the invention, said mechanical coupling means may comprise a connecting bracket integrally coupled to the laser head, which bracket is provided with a first moving device configured to translate a rod, arranged parallel to the longitudinal axis of the laser head, in two opposite directions along a straight line orthogonal to the longitudinal axis of the laser head and parallel to the welding advance direction, the first moving device being further configured to translate the rod in two opposite directions along a straight line parallel to the longitudinal axis of the laser head, the first moving device being also configured to rotate the rod in two opposite directions around its own longitudinal axis, a lower end of the rod being coupled to a second moving device configured to rotate the shoe in two opposite directions around an axis parallel to the upper surface of the supporting base and orthogonal to the welding advance direction, whereby the shoe has four degrees of freedom with respect to the laser head.

According to a further aspect of the invention, the tunnel shape is preferably an inverted V-shape or an inverted U-shape.

According to an additional aspect of the invention, said processing and control unit being further preferably configured to place the shoe, at least when the laser head emits the laser beam, so that the perforated plate is raised above the upper surface of the supporting base.

According to an even further aspect of the invention, the laser head may be further configured to be rotated by said processing and control unit around an axis parallel to the upper surface of the supporting base and orthogonal to the welding advance direction.

According to another aspect of the invention, the supporting base may comprise a main block having at least one recess closed at the top by at least one corresponding upper plate provided with at least one row of through holes equidistant from each other, the main block comprising at least one aperture configured for introducing inert gas in said at least one recess, whereby when inert gas is introduced in said at least one recess it upwardly exits from the through holes of said at least one corresponding upper plate.

According to a further aspect of the invention, the through holes of said at least one upper plate may have a diameter ranging from 1 mm to 6 mm, preferably ranging from 2,5 mm to 5 mm, more preferably ranging from 3,5 mm to 4,5 mm, still more preferably equal to 4 mm, the through holes arranged along a row of said at least one upper plate preferably having a centre distance ranging from 3 mm to 15 mm, more preferably ranging from 7 mm to 13 mm, still more preferably ranging from 10 mm to 12 mm, even more preferably equal to 11 mm.

According to an additional aspect of the invention, said at least one recess may house a diffusion assembly, preferably comprising flakes of steel wool placed so as to fill said at least one recess and having a density ranging from 150 kg/m³ to 310 kg/m³, more preferably ranging from 180 kg/m³ to 280 kg/m³, still more preferably ranging from 200 kg/m³ to 260 kg/m³, even more preferably ranging from 220 kg/m³ to 240 kg/m³, additionally more preferably equal to 230 kg/m³.

According to an even further aspect of the invention, said at least one recess may be shaped so as to have a parallelepiped-shaped lower portion the side walls of which define a substantially rectangular perimeter included within the substantially rectangular perimeter defined by the side walls of a parallelepiped-shaped upper portion of said at least one recess, whereby an abutment edge is created on which said at least one corresponding upper plate is configured to be resting so as to be recessed with respect to the upper surface of the supporting base.

According to another aspect of the invention, the automated apparatus may further comprise an auxiliary nozzle configured to emit a jet of inert gas directed on the laser beam in correspondence to its focal plane, whereby, when the laser head emits the laser beam, the jet of inert gas emitted by the auxiliary nozzle is directed on the zone of a piece under welding hit by the laser beam.

The automated apparatus of laser beam welding according to the invention allows to protect from oxidation and nitridation even the just welded portion of resolidified material that is still beyond the critical temperature for oxidation or nitridation, generally ranging from 200°C to 400°C. In fact, with respect to the prior art apparatuses, the one according to the invention allows to maintain even the just welded portions in an inert environment and even after the passage of the thermal source (i.e. the laser source) at least until their surface reaches temperatures lower than the critical temperature for oxidation or nitridation, so as to avoid such reactive processes.

Moreover, some embodiments of the automated apparatus of laser beam welding according to the invention ensure the coverage of the molten bath on the reverse (i.e. on the surface of the joint under welding facing in direction opposite to that of emission of laser beam), avoiding the oxidation and nitridation even in case of welding with complete penetration of the pieces to weld.

The protection shoe with which some further embodiments of the automated apparatus of laser beam welding according to the invention are provided, thanks to its four degrees of freedom (namely two translations and two rotations) with respect to the laser head, it always guarantees an optimal positioning in order to cover the joint under welding and the related weld seam, independently from the trajectory of the welding to follow, from the possible tilt of the welding head, and from the characteristics (such as, for instance, geometry and focal length) of the welding head.

The present invention will be now described, by way of illustration and not by way of limitation, according to its preferred embodiments, by particularly referring to the Figures of the annexed drawings, in which:
Figure 1 shows a right side view of a first embodiment of the automated apparatus of laser beam welding according to the invention in a first configuration;
Figure 2 shows a perspective view (Fig. 2a), a right side view (Fig. 2b) and a bottom plan view (Fig. 2c) of the protection shoe of the automated apparatus of Figure 1 without the perforated lower plate;
Figure 3 shows a left side view of the automated apparatus of Figure 1 in a second configuration;
Figure 4 shows a left side view of a second embodiment of the automated apparatus of laser beam welding according to the invention;
Figure 5 shows a perspective view (Fig. 5a) of the supporting base of the automated apparatus of Figure 4, a top plan view of a first component of the supporting base of Figure 5a (Fig. 5b), a front view of the first component of Figure 5b (Fig. 5c), a top plan view of a second component of the supporting base of Figure 5a (Fig. 5d) and a side view of the second component of Figure 5d (Fig. 5e);
Figure 6 shows a cross-sectional view of a first weld (Fig. 6a), a cross-sectional view of a second weld (Fig. 6b), and a cross-sectional view of a third weld (Fig. 6c) made by a third embodiment of the automated apparatus of laser beam welding according to the invention; and
Figure 7 shows a perspective view of the protection shoe of the third embodiment of the automated apparatus of laser beam welding according to the invention during execution of the first weld of Figure 6a.

In the Figures identical reference numerals will be used for alike elements.

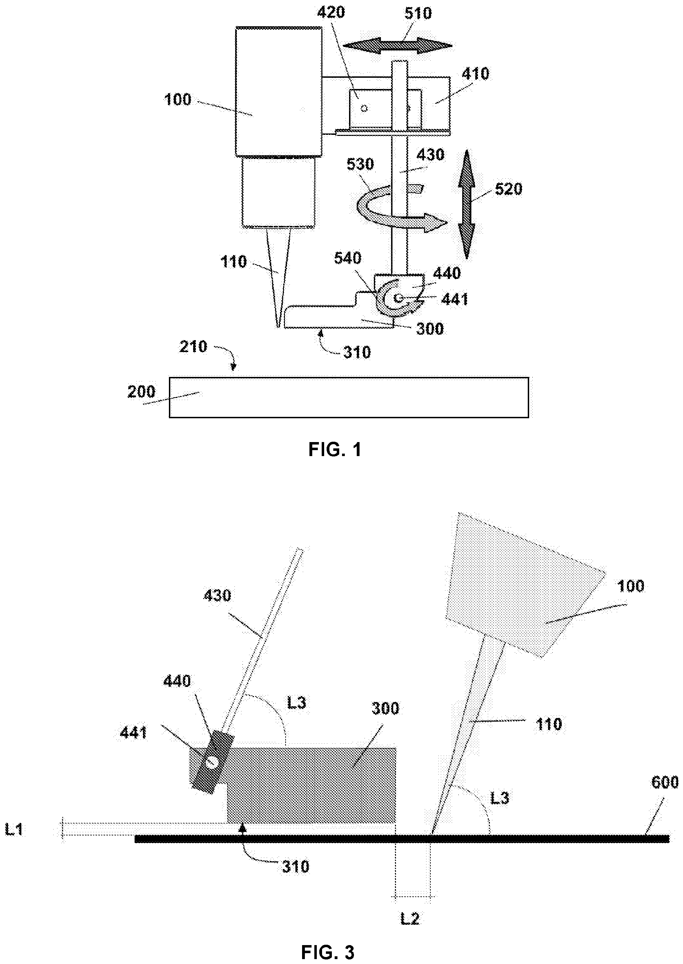

With reference to Figure 1, it may be observed that a first embodiment of the automated apparatus of laser beam welding according to the invention comprises a laser head 100 connected to a laser source (not shown in the Figures) emitting a laser beam 110 exiting from the laser head 100.

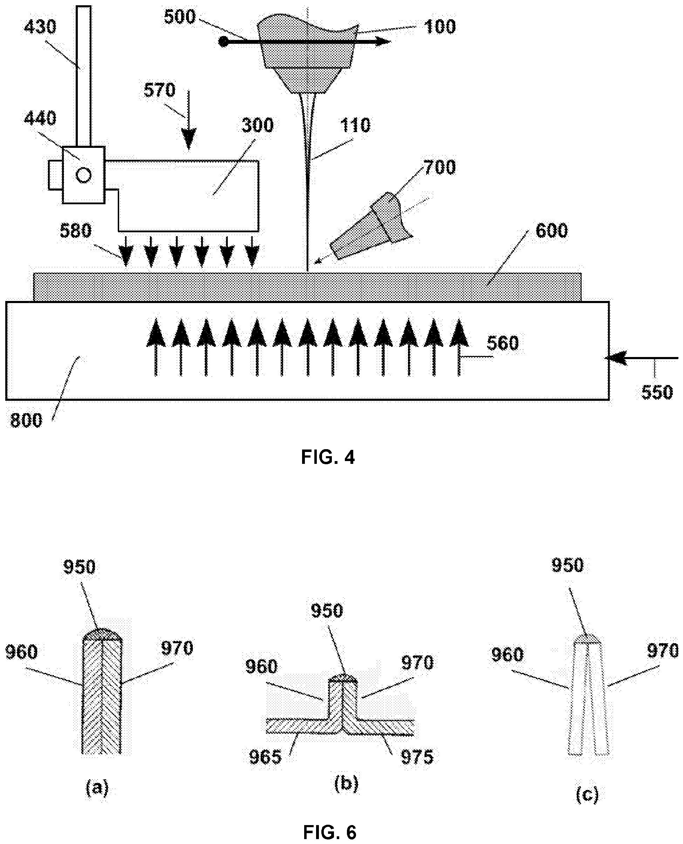

The laser head 100 is configured to be moved by a processing and control unit of the automated apparatus translating over a supporting base 200, having an upper surface 210, that is preferably planar, so as to translate according to two opposite directions along a line parallel to the upper surface 210 of the supporting base 200; in particular, when the laser head 100 emits the laser beam 110, it translates in a welding advance direction (indicated in Figure 4 with the reference numeral 500). The translation speed of the laser head 100, correlated to the welding speed, is preferably settable by an operator through an interface connected to the processing and control unit and, as stated above, it depends on the size and on the material of the pieces to weld.

Also, the laser head 100 is configured to be arranged by the processing and control unit of the automated apparatus so that its longitudinal axis (coinciding with or parallel to the axis of the laser beam 110 emitted by the laser head 100) is parallel or tilted with respect to a straight line normal to the upper surface 210 of the supporting base 200, through a rotation around an axis parallel to the upper surface 210 of the supporting base 200 and orthogonal to the welding advance direction.

Furthermore, the laser head 100 is configured to be translated by the processing and control unit of the automated apparatus according to two opposite directions along a straight line parallel to the straight line normal to the upper surface 210 of the supporting base 200, so that the laser head 100 can be approached or moved away from the upper surface 210 of the supporting base 200.

Other embodiments of the automated apparatus according to the invention may have the laser head 100 that can be moved by the processing and control unit only according to a sub-set of the movements illustrated above, or according to movements alternative or additional to those illustrated above. By way of illustration, and not by way of limitation, the laser head 100 could be configured to be moved by the processing and control unit for freely translating over the supporting base 200 so as to be able to be positioned over any point of the same base 200; for instance, the laser head 100 could translate over the supporting base 200 through a combination of two bidirectional translations along two lines which are orthogonal to each other and parallel to the upper surface 210 of the supporting base 200. Still by way of example, and not by way of limitation, the laser head 100 could be configured to be arranged by the processing and control unit of the automated apparatus so that its longitudinal axis is parallel or tilted with respect to a straight line normal to the upper surface 210 of the supporting base 200 through a combination of two rotations around two axes which are orthogonal to each other and parallel and both parallel to the upper surface 210 of the supporting base 200. By way of further example, and not by way of limitation, the laser head 100 could not be configured to be translated by the processing and control unit of the automated apparatus according to two opposite directions along a straight line parallel to the straight line normal to the upper surface 210 of the supporting base 200.

Further embodiments of the automated apparatus according to the invention may have the laser head 100 that does not translate over the supporting base 200 along any line parallel to the upper surface 210 of the supporting base 200, and having instead the supporting base 200 that translates according to two opposite directions along one or two lines orthogonal to the longitudinal axis of the laser head 100 (when the latter is arranged so that its longitudinal axis is parallel to the straight line normal to the upper surface 210 of the supporting base 200); in this case, the laser head 100 could be configured or not to rotate around only one axis parallel to the upper surface 210 of the supporting base 200 or around two axes which are orthogonal to each other and both parallel to the upper surface 210 of the supporting base 200.

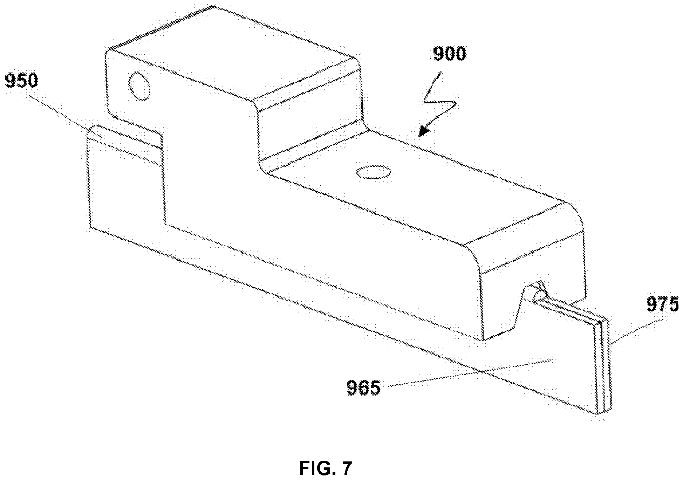

Making again reference to Figure 1, it may be observed that the first embodiment of the automated apparatus of laser beam welding according to the invention further comprises a protection shoe 300, having a perforated lower plate 310, preferably planar, that is coupled to the laser head 100 through mechanical coupling means; at least during the execution of a weld, the lower plate 310 of the shoe 300 is preferably raised above (i.e. not in contact with) the surface 210 of the supporting base 200 (otherwise, it is necessary that the lower plate 310 has a tunnel shape, of structure similar to that shown in Figure 7 and that will be illustrated later, for sliding resting on the surface 210 of the supporting base 200 and allowing the piece under welding to pass in the tunnel shape of the lower plate 310). Preferably, the arrangement of the shoe 300 is such that its lower plate 310 is parallel to the upper surface 210 of the supporting base 200 (as shown in the Figures); moreover, when the laser head 100 emits the laser beam 110 when translating along the welding advance direction, the arrangement of the shoe 300 is such that it follows the laser head 100 along such welding advance direction (as shown in the Figures).

Said mechanical coupling means for coupling the shoe 300 to the laser head 100 comprises a connecting bracket 410 integrally coupled to the laser head 100, which bracket 410 is provided with a first moving device 420 for translating a rod 430 (that, by way of example and not by way of limitation, is screwed) arranged parallel to the longitudinal axis of the laser head 100, a lower end of the rod 430 being coupled to a second moving device 440 for rotating the shoe 300 that is pivoted to the second device 440 through a pivot 441.

The first moving device 420 is configured to translate the rod 430 according to two opposite directions along a straight line 510 orthogonal to the longitudinal axis of the laser head 100 and parallel to the welding advance direction, so as to move closer or farther away the rod 430 with respect to the longitudinal axis of the laser head 100 along the straight line of translation of the latter. Moreover, the first moving device 420 is configured to translate the rod 430 according to two opposite directions along a straight line 520 parallel to the longitudinal axis of the laser head 100, so as to move closer or farther away the lower end of the rod 430 with respect to the upper surface 210 of the supporting base 200. Still, the first moving device 420 is configured to rotate according to two opposite directions the rod 430 around its own longitudinal axis (parallel to the longitudinal axis of the laser head 100); such two possible opposite rotations of the rod 430 are shown schematically in Figure 1 by the arc 530.

The second moving device 440 is configured to rotate according to two opposite directions the shoe 300 around the pivot 441 (parallel to the upper surface 210 of the supporting base 200 and orthogonal to the welding advance direction); such two possible opposite rotations of the shoe 300 are shown schematically in Figure 1 by the arc 540.

In other words, the first and second moving devices 420 and 440 of the first embodiment of the welding apparatus, which are controlled by the processing and control unit, provide the shoe 300 with four degrees of freedom (namely two translations and two rotations) with respect to the laser head 100, in particular allowing an arrangement of the shoe 300 such that its lower plate 310 is parallel to the upper surface 210 of the supporting base 200 independently from the possible tilt of the laser head 100.

Other embodiments of the automated apparatus according to the invention may have mechanical coupling means and means for moving the shoe 300 different from those shown in Figure 1 (e.g. different from the assembly comprising the first moving device 420, the rod 430, and the second moving device 440) which also provide the shoe 300 with four degrees of freedom with respect to the laser head 100. By way of example, and not by way of limitation, the shoe may be connected through a powered ball joint to a rod integrally coupled to a bracket, in turn integrally coupled to the laser head 100; in this case, the powered ball joint, controlled by the processing and control unit of the automated apparatus, would be configured to make the shoe 300 perform both rotations shown schematically in Figure 1 by the arcs 530 and 540.

Further embodiments of the automated apparatus according to the invention may have the shoe that has no degree of freedom or that has a number of degrees of freedom with respect to the laser head 100 different from four and ranging from one to six. Alternatively, the first moving device 420 could be configured only for translating the rod 430 along the straight line 520 illustrated in Figure 1, whereby the only allowed rotation of the shoe 300 would be that shown schematically in Figure 1 by the arc 540 through the second moving device 440, so that the shoe 300 would have only two degrees of freedom with respect to the laser head 100. Still alternatively, the first moving device 420 could be configured to make the rod 430 perform the rotation shown schematically in Figure 1 by the arc 530 and to translate the rod 430, besides along the straight lines 510 and 520 illustrated in Figure 1, also according to two opposite directions along a straight line orthogonal to such two straight lines 510 and 520, while the second moving device 440 could be configured to make the shoe 300 perform, for instance through a powered ball joint, both the rotation shown schematically in Figure 1 by the arc 540 and a third bidirectional rotation around an axis parallel to the welding advance direction; in this case, the shoe 300 would have six degrees of freedom with respect to the laser head 100.

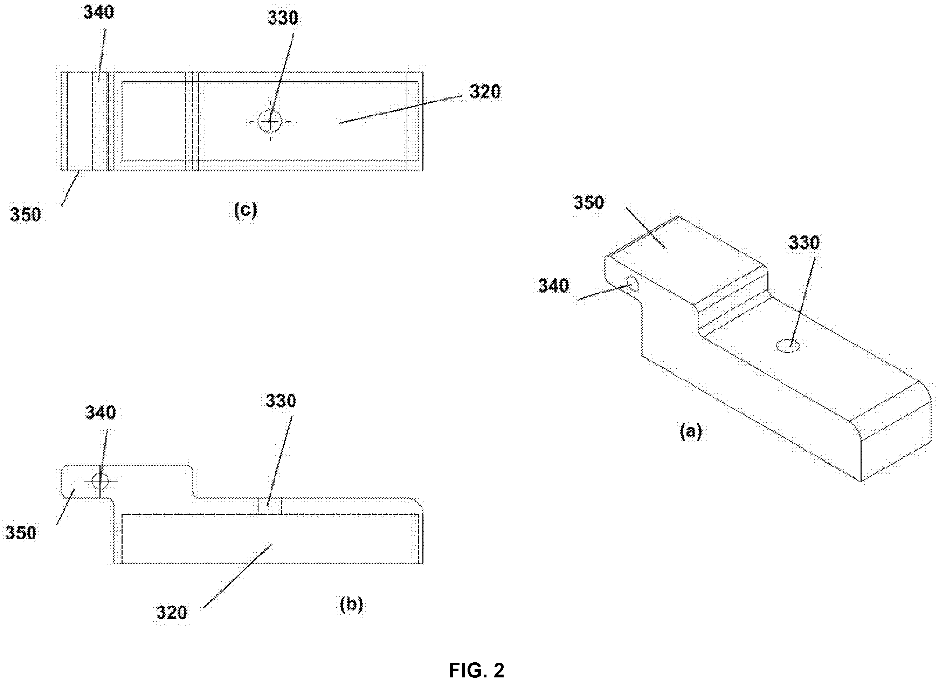

Returning to the first embodiment of the automated apparatus according to the invention shown in Figure 1, and making also reference to Figure 2, it may be observed that the shoe 300 is provided with an inner cavity 320 accessible from outside through an upper through hole 330 and closed at the bottom by the lower plate 310 (not shown in Figure 2), that is preferably removable. Through the upper through hole 330, inert gas (such as for instance argon or helium) is introduced in the inner cavity 320 (for instance from a conventional external pipe connected to a gas supply system controlled by the processing and control unit of the automated apparatus) and it exits from the bottom of the lower plate 310 that is perforated and removably attached to the shoe 300 with side screws (not shown in the Figures). In particular, the inner cavity 320 houses an inner diffusion assembly through which the inert gas spreads, preferably in a uniform way, under the lower plate 310 (or at least one portion thereof, for instance in the case where the lower plate 310 has a tunnel shape).

Such diffusion assembly comprises flakes of steel wool placed so as to fill the whole inner cavity 320, with a density ranging from 150 kg/m³ to 310 kg/m³, preferably ranging from 180 kg/m³ to 280 kg/m³, more preferably ranging from 200 kg/m³ to 260 kg/m³, still more preferably ranging from 220 kg/m³ to 240 kg/m³, even more preferably equal to 230 kg/m³. The flakes of steel wool, which are maintained within the inner cavity 320 by the lower plate 310, permit a substantially uniform diffusion of the inert gas within the inner cavity 320 of the shoe 300. Other embodiments of the automated apparatus according to the invention may comprise other types of diffusion assemblies, for instance a system of inner channels (possibly obtained in the same body of the shoe 300, whereby the inner cavity 320 is formed by the inner channels system) connecting the upper through hole 330 to the holes of the lower plate 310 so that the length of the path from the upper through hole 330 to each hole of the lower plate 310 is constant, with proper appropriate branches of channels from the upper through hole 330 to the holes of the lower plate 310.

The holes of the lower plate 310 have each a diameter preferably ranging from 0,2 mm to 1 mm, more preferably ranging from 0,3 mm to 0,8 mm, still more preferably ranging from 0,4 mm to 0,6 mm, even more preferably equal to 0,5 mm. In particular, the inventors have ascertained that holes of diameter lower than 0,2 mm are too small for an easy discharge of the inert gas, thus causing the onset of turbulences hindering its outflow, while holes of diameter larger than 1 mm provoke a discharge of gas that is no more uniform under the entire surface of the lower plate 310 of the shoe 300, thus creating favoured outflow zones.

The length of the shoe 300, or stating more correctly the length of the perforated lower plate 310 (where the term length means the dimension along the welding advance direction), is defined on the basis of the welding speed, i.e. of the speed of translation of the laser head 100 on the pieces under welding. In fact, when the welding speed increases, the time of permanence of the shoe 300 on the zone to protect (i.e. on the just welded portion of resolidified material that is still beyond the critical temperature for oxidation or nitridation) reduces, whereby it would be necessary to use longer shoes. However, with the laser beam welding, when the welding speed increases, at the same output laser power, there is a reduction of the thermal input (equal to the power to speed ratio) with second-order quasi-polynomial relationship. Hence, even at high speeds, at the same output laser power, the same length of the perforated lower plate 310 guarantees an optimal coverage. In particular, the perforated lower plate 310 shown in the Figures has a length preferably ranging from 70 mm to 130 mm, more preferably ranging from 85 mm to 115 mm, still more preferably ranging from 93 mm to 105 mm, even more preferably equal to 98 mm. In this regard, some embodiments of the automated apparatus according to the invention may have a plurality of two or more shoes 300 different from each other, as to the size, in particular, the length (and/or possibly the width) of the lower plate 310, which may be individually mounted depending on the power of the laser beam 110 and on the welding speed of the specific welding process that is to be executed; such different shoes 300 could be also individually manufactured and sold, i.e. independently from the other components of the automated apparatus.

Figure 2 shows in greater detail the rear through hole 340, present on an upward projecting rear portion 350 of the shoe 300, into which the pivot 441 shown in Figure 1 is inserted. However, it should be understood that the specific shape and arrangement of the through hole 340, as well as the specific shape and arrangement of the aperture for introducing the inert gas in the inner cavity 320 (that in Figure 2 consists of an upper through hole 330) are not essential features of the invention.

With reference to Figure 3, it may be observed that the processing and control unit of the first embodiment of the automated apparatus may adjust the following parameters of the arrangement of the shoe 300:
- the distance of the perforated lower plate 310 from the upper surface of the supporting base (not shown in Figure 3), i.e. the distance L1 of the perforated lower plate 310 from the upper surface of the piece 600 under process;
- the distance L2 from the laser beam 110 emitted by the laser head 100;
- the angle L3 formed by the rod 430 with the lower planar perforated plate 310, so that it is equal to the angle L3 formed by the longitudinal axis of the laser head 100 with the upper surface of the piece 600 under process, whereby the lower planar perforated plate 310 is parallel to the upper surface of the piece 600; in other words, such adjustment is useful when it is desired to work with a laser beam 110 that is not parallel to the straight line normal to the surface of the piece, still maintaining the lower surface of the shoe 300 parallel to that of the piece to weld;
- the angle (not shown in Figure 3) formed by the longitudinal axis of the shoe 300 and the welding advance direction.

In other words, the first and second moving devices 420 and 440 provide the shoe 300 with four degrees of freedom (namely two translations and two rotations) with respect to the laser head 100, always guaranteeing an optimal positioning of the shoe to the end of covering the weld seam, independently from the characteristics (such as, for instance, geometry and focal length) of the laser head 100, from its possible tilt and from the trajectory to follow.

The shoe 300 and the related mechanical coupling means 410, 420, 430, and 440 have minimum size and are applicable to any type of laser head. By way of example and not by way of limitation, the inventors have applied the shoe 300 and the related mechanical coupling means to a laser head BEO D70, available from the company group TRUMPF, with focal length of 200 mm, mounted on an anthropomorphic robot IRB2400 with six axes available from the company group ABB.

Advantageously, the shoe 300 guaranteeing the protection of the molten zone and of the neighbouring zones (in particular of the just welded portion of resolidified material that is still beyond the critical temperature for oxidation or nitridation, until its temperature returns below such critical temperature) is beneficially accompanied by an auxiliary nozzle (not shown in Figures 1-3, and indicated with number 700 in the second embodiment of the apparatus according to the invention shown in Figure 4) that has the main task of avoiding the formation of plasma that is generated during a welding process with very high power densities, of the order of 10⁴ W/mm². The inert gas usually used for eliminating plasma is helium, thanks to its high ionization potential; however, it is possible to use also other types of more inexpensive inert gases as argon. In particular, the auxiliary nozzle is oriented so as to direct the emitted jet of inert gas towards the zone of the piece 600 under welding hit by the laser beam 110 (i.e. towards the laser beam 110 in correspondence with its focal plane).

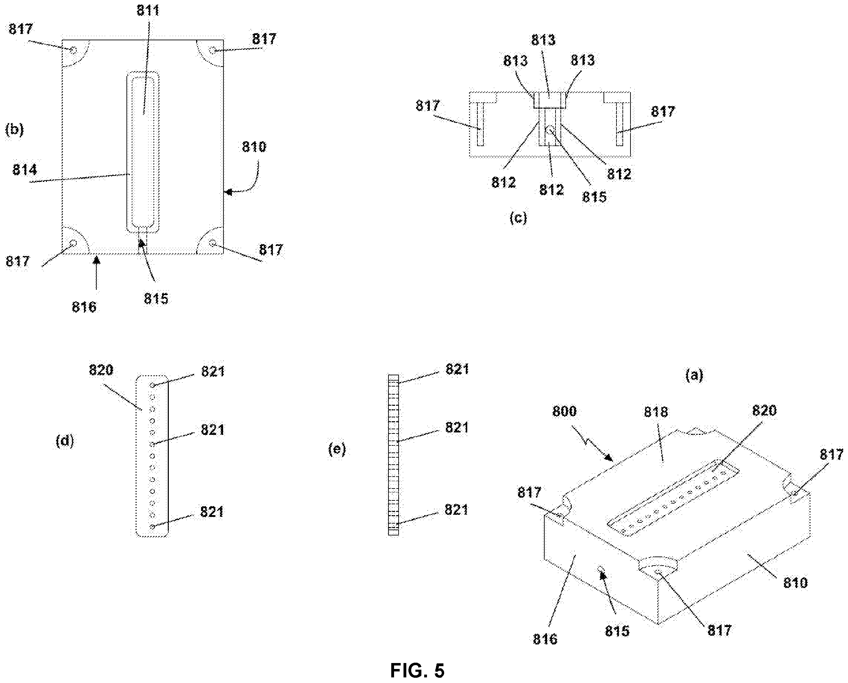

Figure 4 shows a second embodiment of the automated apparatus according to the invention capable to carry out welding processes with complete penetration of the pieces to weld. In this case, the automated apparatus according to the invention gives inert gas even to the reverse of the molten bath (i.e. to the surface of the joint under welding facing in direction opposite to that of emission of the laser beam 110), also avoiding the oxidation and nitridation of the reverse of the welded joint. To this end, the automated apparatus of Figure 4 comprises a planar supporting base 800, shown in greater detail in Figure 5, comprising a main block 810 and an upper plate 820. The main block 810 has a central recess 811 configured to be closed at the top by the upper plate 820, that can be attached, preferably in a removable way, on the central recess 811. The upper plate 820 is provided with a row of through holes 821 equidistant from each other and longitudinally arranged along a central line, so that, when the supporting base 800 is assembled and mounted on the automated apparatus, the through holes 821 are aligned with the line along which the laser head 100 advances during the welding process. The through holes 821 have each a diameter preferably ranging from 1 mm to 6 mm, more preferably ranging from 2,5 mm to 5 mm, still more preferably ranging from 3,5 mm to 4,5 mm, even more preferably equal to 4 mm; the through holes 821 have a centre distance proportionally variable with the size of their diameter, and that is preferably ranging from 3 mm to 15 mm, more preferably ranging from 7 mm to 13 mm, still more preferably ranging from 10 mm to 12 mm, even more preferably equal to 11 mm.

In particular, as better shown in Figure 5c, the central recess 811 is shaped so as to have a (substantially parallelepiped-shaped) lower portion the side walls 812 of which define a substantially rectangular perimeter (viewed from the top, as in Figure 5b) included within the substantially rectangular perimeter defined by the side walls 813 of a (substantially parallelepiped-shaped) upper portion of the central recess 811, so as to create an abutment edge 814 onto which the upper plate 820 may be resting; in this way, when the supporting base 800 is assembled, the upper plate 820, that advantageously has a perimeter with shape and size corresponding to the substantially rectangular perimeter defined by the side walls 813 of the upper portion of the central recess 811, is slightly recessed with respect to the upper surface 818 of the main block 810 (i.e. with respect to the upper surface 818 of the supporting base 800).

Still making reference to Figure 4, when the supporting base 800 is assembled and mounted on the automated apparatus (e.g. through brackets attachable to the supporting base 800 through screws and/or bolts insertable into holes 817 of the main block 810), at least during a welding process, inert gas (such as for instance argon or nitrogen) is introduced in the central recess 811 (for instance, from a conventional external pipe, shown schematically by the arrow indicated with the reference numeral 550 in Figure 4, connected to a to a gas supply system controlled by the processing and control unit of the automated apparatus, being preferably the same system supplying the inner cavity 320 of the shoe 300) through a through hole 815 placed on a side wall 816 of the main block 810. The inert gas then upwardly exits from the through holes 821 of the upper plate 820 (as shown schematically by the arrows indicates with the reference numeral 560 in Figure 4), uniformly distributing over the entire lower surface of the piece 600 under process (i.e. over the entire surface of the piece 600 under process facing in direction opposite to that of emission of the laser beam 110). In Figure 4 is also shown schematically (by the arrow indicated with the reference numeral 570) the introduction of inert gas in the inner cavity 320 of the shoe 300 and the exiting of the same from the holes of the perforated lower plate 310 of the shoe 300 (by the arrows indicated with the reference numeral 580). Obviously, the pieces 600 to weld must be positioned on the supporting base 800 with the welding trajectory in correspondence of the through holes 821 of the upper plate 820 in order to obtain an optimal coverage of the welded zone.

It must be understood that the specific shape and arrangement of the central recess 811 of the main block 810 as well as the specific shape and arrangement of the aperture for introducing the inert gas in the central recess 811 of the main block 810 (that in Figure 5 consists of a through hole 815 on a side wall 816) are not essential features of the invention; by way of example, and not by way of limitation, the main block 810 could comprise a plurality of two or more through holes arranged along its side walls or on the lower supporting surface.

The length of the segment of the upper plate 820 provided with the through holes 821 and consequently the lengths of the upper plate 820 and central recess 811 depends on the length of the welding path (i.e. on the length of the maximum translation that the laser beam 110 can make during welding): the segment of the upper plate 820 provided with the through holes 821 must have a length longer or equal to the welding path.

Other embodiments of the automated apparatus according to the invention may comprise a diffusion assembly housed in the central recess 811, for instance comprising a system of inner channels or flakes of steel wool placed so as to fill the whole central recess 811, with a density ranging from 150 kg/m³ to 310 kg/m³, preferably ranging from 180 kg/m³ to 280 kg/m³, more preferably ranging from 200 kg/m³ to 260 kg/m³, still more preferably ranging from 220 kg/m³ to 240 kg/m³, even more preferably equal to 230 kg/m³.

Further embodiments of the automated apparatus according to the invention may comprise a main block of the supporting base having a central recess of larger size or two or more recesses, each closed by a respective upper plate provided with one or more rows of through holes, so that the through holes for letting the inert gas exit are distributed over the entire surface, most of all in the embodiments of the automated apparatus according to the invention wherein the laser head is configured to freely translate over the supporting base so as to be able to be positioned over any point of the same base. In this case, if there are two or more cave, the processing and control unit could control the inert gas supply system so as to introduce inert gas in the recesses in a selective, i.e. only in the recesses over which the laser head passes during laser beam emission.

With reference to Figure 6, it may be observed that a third embodiment of the automated apparatus of laser beam welding according to the invention may carry out welds having particular shapes of the weld joint or seam as for instance in the case of an edge joint 950 between the end portions 960 and 970 of two plates 965 and 975. In this type of joint, the ends 960 and 970 meet in correspondence with the corners or edges of the end portions 960 and 970 of the two plates 965 and 975 forming an angle that may range from 0° (as shown in Figures 6a and 6b) to 30° (as shown in Figure 6c) and the weld seam 980 entirely (or almost entirely) covers the two corners or edges of the end portions 960 and 970 of the two plates 965 and 975.

As shown in Figure 7, the perforated lower plate of the protection shoe 900 of such third embodiment of the automated apparatus of laser beam welding according to the invention comprises at least one portion advantageously having a tunnel shape (e.g. a substantially inverted V-shape with side walls forming an angle larger than 0° and preferably not larger than 30°, or an inverted U-shape with a horizontal wall from which two vertical walls downward project forming between them an angle preferably not larger than 30° and larger than 0° as shown in Figure 7, or an inverted U-shape with a horizontal wall from which two substantially orthogonal vertical walls downward project) for obtaining an optimal coverage of the molten bath in presence of the particular shapes of the weld joint 950 shown in Figure 6 (i.e. the edge joint).

Since the weld seam 950 is equal (or almost equal) to the entire thickness of the two plates 965 and 975, it is necessary that the inert gas acts not only on the two corners or edges of the end portions 960 and 970 of the two plates 965 and 975 (covered by the seam 950) which are hit by the laser beam, rather also on the external parts of the end portions 960 and 970 of the two plates 965 and 975 which are in proximity of the weld seam 950. To this end, a tunnel shape (e.g. an inverted V- or U-shape) of the perforated lower plate of the protection shoe 900 allows the joint 950 under welding to pass under the protection shoe 900 protecting from oxidation and nitridation both the corners or edges of the end portions 960 and 970 of the two plates 965 and 975 directly contacting the laser beam and the external parts of the end portions 960 and 970 of the two plates 965 and 975 which are in proximity of the weld seam 950.

The preferred embodiments of this invention have been described and a number of variations have been suggested hereinbefore, but it should be understood that those skilled in the art can make other variations and changes without so departing from the scope of protection thereof, as defined by the attached claims.

## Claims

1. Automated apparatus of laser beam welding comprising a laser head (100) configured to emit a laser beam (110), the laser head (100) being configured to be moved by a processing and control unit so as to translate over a supporting base (200; 800), having a planar upper surface (210; 818), whereby, when the laser head (100) emits the laser beam (110), the laser head (100) translates in a welding advance direction (500), the automated apparatus further comprising a protection shoe (300), having a planar perforated lower plate (310), that is coupled to the laser head (100) through mechanical coupling means (410, 420, 430, 440, 441) so that, when the laser head (100) emits the laser beam (110) translating along the welding advance direction, the shoe (300) follows the laser head (100) along the welding advance direction (500), the shoe (300) being provided with an inner cavity (320) accessible from outside through at least one aperture (330) configured to introduce inert gas and closed at the bottom by the perforated lower plate (310), the inner cavity (320) housing an inner diffusion assembly, whereby when inert gas is introduced in the inner cavity (320) it spreads under the planar lower plate (310), **characterised in that**, when the laser head (100) emits the laser beam (110), said processing and control unit is configured to place the shoe (300) such that the planar perforated lower plate (310) is parallel to the upper surface (210; 818) of the supporting base (200; 800).

2. Automated apparatus of laser beam welding comprising a laser head (100) configured to emit a laser beam (110), the laser head (100) being configured to be moved by a processing and control unit so as to translate over a supporting base (200; 800), having a planar upper surface (210; 818), whereby, when the laser head (100) emits the laser beam (110), the laser head (100) translates in a welding advance direction (500), the automated apparatus further comprising a protection shoe (900), having a perforated lower plate, that is coupled to the laser head (100) through mechanical coupling means (410, 420, 430, 440, 441) so that, when the laser head (100) emits the laser beam (110) translating along the welding advance direction, the shoe (900) follows the laser head (100) along the welding advance direction (500), the shoe (900) being provided with an inner cavity accessible from outside through at least one aperture configured to introduce inert gas and closed at the bottom by the perforated lower plate, the inner cavity housing an inner diffusion assembly, whereby when inert gas is introduced in the inner cavity it spreads under at least one portion of the lower plate, **characterised in that** the perforated lower plate comprises a portion having a tunnel shape and **in that**, when the laser head (100) emits the laser beam (110), said processing and control unit is configured to place the shoe (900) such that the perforated lower plate is parallel to the upper surface (210; 818) of the supporting base (200; 800).

3. Automated apparatus according to claims 1 and 2, **characterised in that** said inner diffusion assembly comprises flakes of steel wool placed so as to fill the whole inner cavity (320) and having a density ranging from 150 kg/m³ to 310 kg/m³, preferably ranging from 180 kg/m³ to 280 kg/m³, more preferably ranging from 200 kg/m³ to 260 kg/m³, still more preferably ranging from 220 kg/m³ to 240 kg/m³, even more preferably equal to 230 kg/m³.

4. Automated apparatus according to any one of the preceding claims, **characterised in that** the perforated lower plate (310) is provided with a plurality of holes each having a diameter ranging from 0,2 mm to 1 mm, preferably ranging from 0,3 mm to 0,8 mm, more preferably ranging from 0,4 mm to 0,6 mm, still more preferably equal to 0,5 mm.

5. Automated apparatus according to any one of the preceding claims, **characterised in that** said mechanical coupling means (410, 420, 430, 440, 441) comprises moving means (420, 430, 440) configured to be controlled by said processing and control unit and to give to the shoe (300; 900) from one to six degrees of freedom with respect to the laser head (100).

6. Automated apparatus according to claim 5, **characterised in that** said moving means (420, 430, 440) is configured to translate the shoe (300; 900) according to two opposite directions along a straight line (520) parallel to the longitudinal axis of the laser head (100) and to rotate the shoe (300; 900) in two opposite directions around an axis (441) parallel to the upper surface (210; 818) of the supporting base (200; 800) and orthogonal to the welding advance direction (500), whereby the shoe (300; 900) has two degrees of freedom with respect to the laser head (100).

7. Automated apparatus according to claim 5, **characterised in that** said mechanical coupling means comprises a connecting bracket (410) integrally coupled to the laser head (100), which bracket (410) is provided with a first moving device (420) configured to translate a rod (430), arranged parallel to the longitudinal axis of the laser head (100), in two opposite directions along a straight line (510) orthogonal to the longitudinal axis of the laser head (100) and parallel to the welding advance direction (500), the first moving device (420) being further configured to translate the rod (430) in two opposite directions along a straight line (520) parallel to the longitudinal axis of the laser head (100), the first moving device (420) being also configured to rotate the rod (430) in two opposite directions around its own longitudinal axis, a lower end of the rod (430) being coupled to a second moving device (440) configured to rotate the shoe (300; 900) in two opposite directions around an axis (441) parallel to the upper surface (210; 818) of the supporting base (200; 800) and orthogonal to the welding advance direction (500), whereby the shoe (300; 900) has four degrees of freedom with respect to the laser head (100).

8. Automated apparatus according to any one of the preceding claims, **characterised in that** said processing and control unit is further configured to place the shoe (300; 900), at least when the laser head (100) emits the laser beam (110), so that the perforated plate (310) is raised above the upper surface (210; 818) of the supporting base (200; 800).

9. Automated apparatus according to any one of the preceding claims, **characterised in that** the laser head (100) is further configured to be rotated by said processing and control unit around an axis parallel to the upper surface (210; 818) of the supporting base (200; 800) and orthogonal to the welding advance direction.

10. Automated apparatus according to any one of the preceding claims, **characterised in that** the supporting base (800) is planar and comprises a main block (810) having at least one recess (811) closed at the top by at least one corresponding upper plate (820) provided with at least one row of through holes (821) equidistant from each other, the main block (810) comprising at least one aperture (815) configured for introducing inert gas in said at least one recess (811), whereby when inert gas is introduced in said at least one recess it upwardly exits from the through holes (821) of said at least one corresponding upper plate (820).

11. Automated apparatus according to claim 10, **characterised in that** the through holes (821) of said at least one upper plate (820) have a diameter ranging from 1 mm to 6 mm, preferably ranging from 2,5 mm to 5 mm, more preferably ranging from 3,5 mm to 4,5 mm, still more preferably equal to 4 mm, the through holes (821) arranged along a row of said at least one upper plate (820) preferably having a centre distance ranging from 3 mm to 15 mm, more preferably ranging from 7 mm to 13 mm, still more preferably ranging from 10 mm to 12 mm, even more preferably equal to 11 mm.

12. Automated apparatus according to claim 10 or 11, **characterised in that** said at least one recess (811) houses a diffusion assembly.

13. Automated apparatus according to claim 12, **characterised in that** said diffusion assembly comprises flakes of steel wool placed so as to fill said at least one recess (811) and having a density ranging from 150 kg/m³ to 310 kg/m³, more preferably ranging from 180 kg/m³ to 280 kg/m³, still more preferably ranging from 200 kg/m³ to 260 kg/m³, even more preferably ranging from 220 kg/m³ to 240 kg/m³, additionally more preferably equal to 230 kg/m³.

14. Automated apparatus according to any one of claims 10 to 13, **characterised in that** said at least one recess (811) is shaped so as to have a parallelepiped-shaped lower portion the side walls (812) of which define a substantially rectangular perimeter included within the substantially rectangular perimeter defined by the side walls (813) of a parallelepiped-shaped upper portion of said at least one recess (811), whereby an abutment edge (814) is created on which said at least one corresponding upper plate (820) is configured to be resting so as to be recessed with respect to the upper surface (818) of the supporting base (800).

15. Automated apparatus according to any one of claims 10 to 14, **characterised in that** it further comprises an auxiliary nozzle (700) configured to emit a jet of inert gas directed on the laser beam (110) in correspondence to its focal plane, whereby, when the laser head (100) emits the laser beam (110), the jet of inert gas emitted by the auxiliary nozzle (700) is directed on the zone of a piece (600) under welding hit by the laser beam (110).

## Patentansprüche

1. Automatisierte Vorrichtung zum Laserstrahlschweißen, die einen Laserkopf (100) umfasst, der so konfiguriert ist, dass er einen Laserstrahl (110) aussendet, wobei der Laserkopf (100) so konfiguriert ist, dass er von einer Verarbeitungs- und Steuereinheit so bewegt werden kann, dass er sich über eine Trägerbasis (200; 800) mit einer ebenen oberen Fläche (210; 818) bewegt, wobei, wenn der Laserkopf (100) den Laserstrahl (110) aussendet, der Laserkopf (100) in einer Schweißvorschubrichtung (500) translatorisch bewegt, wobei die automatisierte Vorrichtung ferner einen Schutzschuh (300) mit einer ebenen, perforierten unteren Platte (310) umfasst, die mit dem Laserkopf (100) über mechanische Kopplungsmittel (410, 420, 430, 440, 441) gekoppelt ist, so dass, wenn der Laserkopf (100) den Laserstrahl (110) aussendet, der sich entlang der Schweißvorschubrichtung verschiebt, der Schuh (300) dem Laserkopf (100) entlang der Schweißvorschubrichtung (500) folgt, wobei der Schuh (300) mit einem inneren Hohlraum (320) versehen ist, der von außen durch mindestens eine Öffnung (330) zugänglich ist, die so konfiguriert ist, dass sie ein Inertgas einführt und unten durch die perforierte untere Platte (310) verschlossen ist, wobei der innere Hohlraum (320) eine innere Diffusionsanordnung aufnimmt, wobei sich das Inertgas, wenn es in den inneren Hohlraum (320) eingeführt wird, unter der ebenen unteren Platte (310) ausbreitet, **dadurch gekennzeichnet, dass**, wenn der Laserkopf (100) den Laserstrahl (110) aussendet, die besagte Verarbeitungs- und Steuereinheit so konfiguriert ist, dass sie den Schuh (300) so platziert, dass die ebene, perforierte untere Platte (310) parallel zur oberen Fläche (210; 818) des Stützpunktes (200; 800) ist.

2. Automatisierte Vorrichtung zum Laserstrahlschweißen, die einen Laserkopf (100) umfasst, der so konfiguriert ist, dass er einen Laserstrahl (110) aussendet, wobei der Laserkopf (100) so konfiguriert ist, dass er von einer Verarbeitungs- und Steuereinheit so bewegt werden kann, dass er sich über eine Trägerbasis (200; 800) mit einer ebenen oberen Fläche (210; 818) bewegt, wobei, wenn der Laserkopf (100) den Laserstrahl (110) aussendet, der Laserkopf (100) in eine Schweißvorschubrichtung (500) translatiert, wobei die automatisierte Vorrichtung ferner einen Schutzschuh (900) mit einer perforierten unteren Platte umfasst, die mit dem Laserkopf (100) über mechanische Kopplungsmittel (410, 420, 430, 440, 441) gekoppelt ist, so dass, wenn der Laserkopf (100) den Laserstrahl (110) aussendet, der sich entlang der Schweißvorschubrichtung verschiebt, der Schuh (900) dem Laserkopf (100) entlang der Schweißvorschubrichtung (500) folgt, wobei der Schuh (900) mit einem inneren Hohlraum versehen ist, der von außen durch mindestens eine Öffnung zugänglich ist, die so konfiguriert ist, dass sie Inertgas einführt und an der Unterseite durch die perforierte untere Platte verschlossen ist, wobei der innere Hohlraum eine innere Diffusionsanordnung aufnimmt, wodurch sich das Inertgas, wenn es in den inneren Hohlraum eingeführt wird, unter mindestens einem Teil der unteren Platte ausbreitet, **dadurch gekennzeichnet, dass** die perforierte untere Platte einen Abschnitt mit einer Tunnelform umfasst und dass, wenn der Laserkopf (100) den Laserstrahl (110) aussendet, die Verarbeitungs- und Steuereinheit so konfiguriert ist, dass sie den Schuh (900) so platziert, dass die perforierte untere Platte parallel zur oberen Fläche (210; 818) ist des Stützpunktes (200; 800).

3. Automatisierte Vorrichtung nach den Ansprüchen 1 und 2, **dadurch gekennzeichnet, dass** die innere Diffusionsanordnung Flocken aus Stahlwolle umfasst, die so angeordnet sind, dass sie den gesamten inneren Hohlraum (320) ausfüllen, und die eine Dichte im Bereich von 150 kg/m³ bis 310 kg/m3, vorzugsweise im Bereich von 180 kg/m³ bis 280 kg/m³, noch bevorzugter im Bereich von 200 kg/m³ bis 260 kg/m3, noch bevorzugter im Bereich von 220 kg/m³ bis 240 kg/m³, noch bevorzugter gleich 230 kg/m³, aufweisen.

4. Automatisierte Vorrichtung nach einem der vorstehenden Ansprüche, **dadurch gekennzeichnet, dass** die untere perforierte Platte (310) mit einer Vielzahl von Löchern versehen ist, die jeweils einen Durchmesser von 0,2 mm bis 1 mm, vorzugsweise von 0,3 mm bis 0,8 mm, noch bevorzugter von 0,4 mm bis 0,6 mm, noch bevorzugter gleich 0,5 mm, aufweisen.

5. Automatisierte Vorrichtung nach einem der vorstehenden Ansprüche, **dadurch gekennzeichnet, dass** die mechanischen Kopplungsmittel (410, 420, 430, 440, 441) Bewegungsmittel (420, 430, 440) umfassen, die so konfiguriert sind, dass sie durch die Verarbeitungs- und Steuereinheit gesteuert werden und dem Schuh (300; 900) einen bis sechs Freiheitsgrade in Bezug auf den Laserkopf (100) verleihen.

6. Automatisierte Vorrichtung nach Anspruch 5, **dadurch gekennzeichnet, dass** die Bewegungseinrichtung (420, 430, 440) so konfiguriert ist, dass sie den Schuh (300; 900) in zwei entgegengesetzte Richtungen entlang einer geraden Linie (520) parallel zur Längsachse des Laserkopfes (100) verschiebt und den Schuh (300) dreht; 900) in zwei entgegengesetzte Richtungen um eine Achse (441) parallel zur Oberseite (210; 818) der Auflagefläche (200; 800) und orthogonal zur Schweißvorschubrichtung (500), wobei der Schuh (300; 900) zwei Freiheitsgrade in Bezug auf den Laserkopf (100) aufweist.

7. Automatisierte Vorrichtung nach Anspruch 5, **dadurch gekennzeichnet, dass** die mechanische Kopplungseinrichtung einen Verbindungsbügel (410) umfasst, der integral mit dem Laserkopf (100) gekoppelt ist, wobei der Bügel (410) mit einer ersten Bewegungsvorrichtung (420) versehen ist, die so konfiguriert ist, dass sie einen Stab (430), der parallel zur Längsachse des Laserkopfes (100) angeordnet ist, in zwei entgegengesetzte Richtungen entlang einer geraden Linie (510) rechtwinklig zur Längsachse des Laserkopfes (100) und parallel zur Schweißvorschubrichtung (500) verschiebt, wobei die erste Bewegungsvorrichtung (420) ferner so konfiguriert ist, dass sie die Stange (430) in zwei entgegengesetzte Richtungen entlang einer geraden Linie (520) parallel zur Längsachse des Laserkopfes (100) verschiebt, wobei die erste Bewegungsvorrichtung (420) auch so konfiguriert ist, dass sie die Stange (430) in zwei entgegengesetzte Richtungen um ihre eigene Längsachse dreht, wobei ein unteres Ende der Stange (430) mit einer zweiten Bewegungsvorrichtung (440) gekoppelt ist, die so konfiguriert ist, dass sie den Schuh (300; 900) dreht in zwei entgegengesetzte Richtungen um eine Achse (441) parallel zur Oberseite (210; 818) der Auflagefläche (200; 800) und orthogonal zur Schweißvorschubrichtung (500), wobei der Schuh (300; 900) vier Freiheitsgrade in Bezug auf den Laserkopf (100) aufweist.

8. Automatisierte Vorrichtung nach einem der vorstehenden Ansprüche, **dadurch gekennzeichnet, dass** die genannte Verarbeitungs- und Steuereinheit außerdem so konfiguriert ist, dass sie den Schuh (300; 900) zumindest dann, wenn der Laserkopf (100) den Laserstrahl (110) aussendet, so platziert, dass die perforierte Platte (310) über die obere Fläche (210; 818) der Trägerbasis (200; 800) angehoben wird.

9. Automatisierte Vorrichtung nach einem der vorstehenden Ansprüche, **dadurch gekennzeichnet, dass** der Laserkopf (100) ferner so konfiguriert ist, dass er durch die Verarbeitungs- und Steuereinheit um eine Achse parallel zur Oberseite (210; 818) der Trägerbasis (200; 800) und orthogonal zur Schweißvorschubrichtung gedreht werden kann.

10. Automatisierte Vorrichtung nach einem der vorstehenden Ansprüche, **dadurch gekennzeichnet, dass** die tragende Basis (800) eben ist und einen Hauptblock (810) mit mindestens einer Aussparung (811) umfasst, die oben durch mindestens eine entsprechende obere Platte (820) verschlossen ist, die mit mindestens einer Reihe von Durchgangslöchern (821) versehen ist, die gleich weit voneinander entfernt sind, wobei der Hauptblock (810) mindestens eine Öffnung (815) umfasst, die zum Einführen von Inertgas in die mindestens eine Aussparung (811) konfiguriert ist, wodurch das Inertgas, wenn es in die mindestens eine Aussparung eingeführt wird, nach oben aus den Durchgangslöchern (821) der mindestens einen entsprechenden oberen Platte (820) austritt.

11. Automatisierte Vorrichtung nach Anspruch 10, **dadurch gekennzeichnet, dass** die Durchgangslöcher (821) der mindestens einen oberen Platte (820) einen Durchmesser im Bereich von 1 mm bis 6 mm, vorzugsweise im Bereich von 2,5 mm bis 5 mm, bevorzugter im Bereich von 3,5 mm bis 4,5 mm, noch bevorzugter gleich 4 mm, aufweisen, die Durchgangslöcher (821), die entlang einer Reihe der mindestens einen oberen Platte (820) angeordnet sind, vorzugsweise mit einem Mittenabstand im Bereich von 3 mm bis 15 mm, bevorzugter im Bereich von 7 mm bis 13 mm, noch bevorzugter im Bereich von 10 mm bis 12 mm, noch bevorzugter gleich 11 mm.

12. Automatisierte Vorrichtung nach Anspruch 10 oder 11, **dadurch gekennzeichnet, dass** in der genannten mindestens eine Aussparung (811) eine Diffusionsanordnung untergebracht ist.

13. Automatisierte Vorrichtung nach Anspruch 12, **dadurch gekennzeichnet, dass** die Diffusionsanordnung Flocken aus Stahlwolle umfasst, die so angeordnet sind, dass sie die mindestens eine Aussparung (811) füllen und eine Dichte im Bereich von 150 kg/m³ bis 310 kg/m3, noch bevorzugter im Bereich von 180 kg/m³ bis 280 kg/m3, noch bevorzugter im Bereich von 200 kg/rn³ bis 260 kg/m³, noch bevorzugter im Bereich von 220 kg/m³ bis 240 kg/m³, zusätzlich noch bevorzugter gleich 230 kg/m³ aufweisen.

14. Automatisierte Vorrichtung nach einem der Ansprüche 10 bis 13, **dadurch gekennzeichnet, dass** die mindestens eine Aussparung (811) so geformt ist, dass sie einen parallelepipedförmigen unteren Abschnitt aufweist, dessen Seitenwände (812) einen im Wesentlichen rechteckigen Umfang definieren, der in dem im Wesentlichen rechteckigen Umfang enthalten ist, der durch die Seitenwände (813) eines parallelepipedförmigen oberen Abschnitts der mindestens einen Aussparung (811) definiert ist, wobei eine Anschlagkante (814) geschaffen wird, auf der die mindestens eine entsprechende obere Platte (820) so konfiguriert ist, dass sie in Bezug auf die Oberseite (818) der Stützbasis (800) zurückgesetzt ist.

15. Automatisierte Vorrichtung nach einem der Ansprüche 10 bis 14, **dadurch gekennzeichnet, dass** sie ferner eine Hilfsdüse (700) umfasst, die so konfiguriert ist, dass sie einen Inertgasstrahl aussendet, der auf den Laserstrahl (110) in Übereinstimmung mit seiner Brennebene gerichtet ist, wobei, wenn der Laserkopf (100) den Laserstrahl (110) aussendet, der von der Hilfsdüse (700) ausgesandte Inertgasstrahl auf die Zone eines vom Laserstrahl (110) getroffenen zu schweißenden Teils (600) gerichtet ist.

## Revendications

1. Appareil automatisé de soudage par faisceau laser comprenant une tête laser (100) conçue pour émettre un faisceau laser (110), la tête laser (100) étant conçue pour être déplacée par une unité de traitement et de commande de manière à effectuer une translation sur une base de support (200 ; 800), ayant une surface supérieure plane (210 ; 818), où, lorsque la tête laser (100) émet le faisceau laser (110), la tête laser (100) effectue une translation dans une direction d'avance de soudage (500), l'appareil automatisé comprenant en outre un sabot de protection (300), ayant une plaque inférieure perforée plane (310), qui est couplée à la tête laser (100) par un moyen de couplage mécanique (410, 420, 430, 440, 441) de sorte que, lorsque la tête laser (100) émet le faisceau laser (110) en effectuant une translation le long de la direction d'avance de soudage, le sabot (300) suit la tête laser (100) le long de la direction d'avance de soudage (500), le sabot (300) étant pourvu d'une cavité interne (320) accessible depuis l'extérieur via au moins une ouverture (330) conçue pour introduire du gaz inerte et fermée au fond par la plaque inférieure perforée (310), la cavité interne (320) logeant un ensemble de diffusion interne, où, lorsque du gaz inerte est introduit dans la cavité interne (320), il se répand sous la plaque inférieure plane (310), caractérisé en que, lorsque la tête laser (100) émet le faisceau laser (110), ladite unité de traitement et de commande est conçue pour placer le sabot (300) de telle sorte que la plaque inférieure perforée plane (310) soit parallèle à la surface supérieure (210 ; 818) de la base de support (200 ; 800).

2. Appareil automatisé de soudage par faisceau laser comprenant une tête laser (100) conçue pour émettre un faisceau laser (110), la tête laser (100) étant conçue pour être déplacée par une unité de traitement et de commande de manière à effectuer une translation sur une base de support (200 ; 800), ayant une surface supérieure plane (210 ; 818), où, lorsque la tête laser (100) émet le faisceau laser (110), la tête laser (100) effectue une translation dans une direction d'avance de soudage (500), l'appareil automatisé comprenant en outre un sabot de protection (900), ayant une plaque inférieure perforée, qui est couplée à la tête laser (100) par un moyen de couplage mécanique (410, 420, 430, 440, 441) de sorte que, lorsque la tête laser (100) émet le faisceau laser (110) en effectuant une translation le long de la direction d'avance de soudage, le sabot (900) suit la tête laser (100) le long de la direction d'avance de soudage (500), le sabot (900) étant pourvu d'une cavité interne accessible depuis l'extérieur via au moins une ouverture conçue pour introduire du gaz inerte et fermée au fond par la plaque inférieure perforée, la cavité interne logeant un ensemble de diffusion interne, où, lorsque du gaz inerte est introduit dans la cavité interne, il se répand sous au moins une partie de la plaque inférieure, **caractérisé en ce que** la plaque inférieure perforée comprend une partie ayant une forme de tunnel et **en ce que**, lorsque la tête laser (100) émet le faisceau laser (110), ladite unité de traitement et de commande est conçue pour placer le sabot (900) de telle sorte que la plaque inférieure perforée soit parallèle à la surface supérieure (210 ; 818) de la base de support (200; 800).

3. Appareil automatisé selon les revendications 1 et 2, **caractérisé en ce que** ledit ensemble de diffusion interne comprend des flocons de laine d'acier placés de manière à remplir toute la cavité interne (320) et ayant une densité allant de 150 kg/m³ à 310 kg/m³, de préférence allant de 180 kg/m³ à 280 kg/m³, plus préférentiellement allant de 200 kg/m³ à 260 kg/m³, encore plus préférentiellement allant de 220 kg/m³ à 240 kg/m³, encore plus préférentiellement égal à 230 kg/m³.

4. Appareil automatisé selon l'une quelconque des revendications précédentes, **caractérisé en ce que** la plaque inférieure perforée (310) est pourvue d'une pluralité de trous ayant chacun un diamètre allant de 0,2 mm à 1 mm, de préférence allant de 0,3 mm à 0,8 mm, plus préférentiellement allant de 0,4 mm à 0,6 mm, encore plus préférentiellement égal à 0,5 mm.

5. Appareil automatisé selon l'une quelconque des revendications précédentes, **caractérisé en ce que** ledit moyen de couplage mécanique (410, 420, 430, 440, 441) comprend un moyen de déplacement (420, 430, 440) conçu pour être commandé par ladite unité de traitement et de commande et pour donner au sabot (300 ; 900) un à six degrés de liberté par rapport à la tête laser (100).

6. Appareil automatisé selon la revendication 5, **caractérisé en ce que** le moyen de déplacement (420, 430, 440) est conçu pour faire effectuer une translation au sabot (300 ; 900) selon deux directions opposées le long d'une ligne droite (520) parallèle à l'axe longitudinal de la tête laser (100) et pour mettre en rotation le sabot (300 ; 900) dans deux directions opposées autour d'un axe (441) parallèle à la surface supérieure (210 ; 818) de la base de support (200 ; 800) et orthogonal à la direction d'avance de soudage (500), où le sabot (300 ; 900) ayant deux degrés de liberté par rapport à la tête laser (100).

7. Appareil automatisé selon la revendication 5, **caractérisé en ce que** ledit moyen de couplage mécanique comprend un support de connexion (410) couplé intégralement à la tête laser (100), lequel support (410) est pourvu d'un premier dispositif mobile (420) conçu pour faire effectuer une translation à une tige (430), positionnée parallèlement à l'axe longitudinal de la tête laser (100), dans deux directions opposées le long d'une ligne droite (510) orthogonale à l'axe longitudinal de la tête laser (100) et parallèle à direction d'avance de soudage (500), le premier dispositif mobile (420) étant en outre conçu pour faire effectuer une translation à la tige (430) dans deux directions opposées le long d'une ligne droite (520) parallèle à l'axe longitudinal de la tête laser (100), le premier dispositif mobile (420) étant également conçu pour mettre en rotation la tige (430) dans deux directions opposées autour de son propre axe longitudinal, une extrémité inférieure de la tige (430) étant couplée à un deuxième dispositif mobile (440) conçu pour mettre en rotation le sabot (300 ; 900) dans deux directions opposées autour d'un axe (441) parallèle à la surface supérieure (210 ; 818) de la base de support (200 ; 800) et orthogonal à la direction d'avance de soudage (500), le sabot (300; 900) ayant quatre degrés de liberté par rapport à la tête laser (100).

8. Appareil automatisé selon l'une quelconque des revendications précédentes, **caractérisé en ce que** ladite unité de traitement et de commande est en outre conçue pour placer le sabot (300 ; 900), au moins lorsque la tête laser (100) émet le faisceau laser (110), de sorte que la plaque perforée (310) est élevée au-dessus de la surface supérieure (210 ; 818) de la base de support (200 ; 800).

9. Appareil automatisé selon l'une quelconque des revendications précédentes, **caractérisé en ce que** la tête laser (100) est en outre conçue pour être mise en rotation par ladite unité de traitement et de commande autour d'un axe parallèle à la surface supérieure (210 ; 818) de la base de support (200 ; 800) et orthogonal à la direction d'avance de soudage.

10. Appareil automatisé selon l'une quelconque des revendications précédentes, **caractérisé en ce que** la base de support (800) est plane et comprend un bloc principal (810) ayant au moins un évidement (811) fermé au sommet par au moins une plaque supérieure correspondante (820) pourvue d'au moins une rangée de trous traversants (821) équidistants les uns des autres, le bloc principal (810) comprenant au moins une ouverture (815) conçue pour introduire du gaz inerte dans ledit au moins un évidement (811), où lorsque du gaz inerte est introduit dans ledit au moins un évidement dont il s'échappe vers le haut à partir des trous traversants (821) de ladite au moins une plaque supérieure correspondante (820).

11. Appareil automatisé selon la revendication 10, **caractérisé en ce que** les trous traversants (821) de ladite au moins une plaque supérieure (820) ont un diamètre allant de 1 mm à 6 mm, de préférence allant de 2,5 mm à 5 mm, plus préférablement allant de 3,5 mm à 4,5 mm, encore plus préférentiellement égal à 4 mm, les trous traversants (821) positionnés le long d'une rangée de ladite au moins une plaque supérieure (820) présentant de préférence une distance de centre à centre allant de 3 mm à 15 mm, plus préférentiellement allant de 7 mm à 13 mm, encore plus préférentiellement allant de 10 mm à 12 mm, encore plus préférentiellement égal à 11 mm.

12. Appareil automatisé selon la revendication 10 ou 11, **caractérisé en ce que** ledit au moins un évidement (811) abrite un ensemble de diffusion.

13. Appareil automatisé selon la revendication 12, **caractérisé en ce que** ledit ensemble de diffusion comprend des flocons de laine d'acier placés de manière à remplir ledit au moins un évidement (811) et ayant une densité allant de 150 kg/m³ à 310 kg/m³, plus préférablement allant de 180 kg/m³ à 280 kg/m³, encore plus préférentiellement allant de 200 kg/m³ à 260 kg/m³, encore plus préférentiellement allant de 220 kg/m³ à 240 kg/m³, encore plus préférentiellement égal à 230 kg/m³.

14. Appareil automatisé selon l'une quelconque des revendications 10 à 13, **caractérisé en ce que** ledit au moins un évidement (811) est conformé de manière à avoir une portion inférieure de forme parallélépipédique dont les parois latérales (812) définissent un périmètre sensiblement rectangulaire inclus dans le périmètre sensiblement rectangulaire défini par les parois latérales (813) d'une partie supérieure de forme parallélépipédique dudit au moins un évidement (811), où un bord de butée (814) étant créé sur lequel ladite au moins une plaque supérieure correspondante (820) est conçue pour reposer de manière à être en retrait par rapport à la surface supérieure (818) de la base de support (800).

15. Appareil automatisé selon l'une quelconque des revendications 10 à 14, **caractérisé en ce qu'**il comprend en outre une buse auxiliaire (700) conçue pour émettre un jet de gaz inerte dirigé sur le faisceau laser (110) en correspondance avec son plan focal, où, lorsque la tête laser (100) émet le faisceau laser (110), le jet de gaz inerte émis par la buse auxiliaire (700) est dirigé sur la zone d'une pièce (600) en cours de soudage touchée par le faisceau laser (110).
